# EUROPÄISCHE PATENTSCHRIFT

(11) **EP 0 840 833 B1**
(45) Veröffentlichungstag und Bekanntmachung des Hinweises auf die Patenterteilung: **10.05.2000**
(21) Anmeldenummer: 96922814.7
(22) Anmeldetag: 15.06.1996
(51) Int. Cl.: E06B 9/24, A01G 9/22

(54) **BESCHATTUNGSVORRICHTUNG**
SUN-BLIND
DISPOSITIF PARE-SOLEIL

(30) Priorität: 25.07.1995 DE 19527084
(43) Veröffentlichungstag der Anmeldung: 13.05.1998
(73) Patentinhaber: FESTO AG & Co, 73734 Esslingen (DE)
(72) Erfinder: STOLL, Wilfried, D-70184 Stuttgart (DE); THALLEMER, Axel, D-73728 Esslingen (DE)
(74) Vertreter: Abel, Martin, Dipl.-Ing.
(86) Internationale Anmeldenummer: EP9602591
(87) Internationale Veröffentlichungsnummer: WO9705358

(56) Entgegenhaltungen:
- EP-A- 0 075 464
- CH-A- 528 663
- DE-A- 3 321 734

## Beschreibung

Die Erfindung betrifft eine Beschattungsvorrichtung zur Beeinflussung der Sonneneinstrahlung in einen hinter oder unter der Beschattungsvorrichtung liegenden Bereich, mit mindestens einer Regulierkammer, die von zwei in Strahlungsrichtung mit Abstand zueinander angeordneten lichtdurchlässigen Wänden begrenzt ist und die mit einer Reguliereinrichtung zur veränderlichen Vorgabe des in ihr herrschenden Innendruckes verbunden ist, wobei eine Vielzahl von kleinen, verteilt angeordneten Beschattungselementen vorhanden ist, deren Relativlage vom durch den in der Regulierkammer herrschenden Innendruck bestimmten Abstand zwischen den beiden Wänden abhängt.

Eine Beschattungsvorrichtung dieser Art geht aus der DE-A-3321734 hervor. Die Regulierkammer ist dort von zwei lichtdurchlässigen Wänden begrenzt, die teilweise mit Beschattungselementen, beispielsweise in Form aufgeklebter Aluminiumfolie, versehen sind, so daß sich Bereiche mit unterschiedlicher Lichtdurchlässigkeit ergeben. Durch Variation des Innendruckes in der Regulierkammer läßt sich der Abstand zwischen den beiden Wänden verändern und somit die Beschattungsintensität beeinflussen. Da die Beschattungselemente sehr exakt auf den Wänden positioniert werden müssen, ist jedoch ein nicht geringer Aufwand erforderlich, um den gewünschten Beschattungseffekt zu gewährleisten.

Eine Beschattungsvorrichtung vergleichbaren Aufbaues ist in der CH-A-528 663 beschrieben.

Es ist die Aufgabe der vorliegenden Erfindung, eine Beschattungsvorrichtung der eingangs genannten Art zu schaffen, die bei einfachem Aufbau und relativ geringem Gewicht sehr betriebssicher ist.

Zur Lösung dieser Aufgabe ist vorgesehen, daß mindestens eine der Wände als zumindest partiell gummielastisch verformbare Membranwand ausgebildet ist, und daß sich im Innern der Regulierkammer Beschattungselemente befinden, die von Schwebepartikeln des in der Regulierkammer vorliegenden und unter Druck stehenden Fluides gebildet sind.

Eine derart konzipierte Beschattungsvorrichtung hat den Vorteil, einen relativ einfachen Aufbau zu besitzen und sehr betriebssicher zu sein. Über die Reguliereinrichtung läßt sich der in der Regulierkammer herrschende Innendruck variieren und bedarfsgemäß einstellen, wobei je nach Innendruck ein unterschiedlich großer Abstand zwischen den beiden Wänden vorliegt, der sich auf die Relativlage der Beschattungselemente auswirkt, die von Schwebepartikeln des in der Regulierkammer befindlichen Fluides gebildet sind. Als geeignetes Fluid wäre beispielsweise Rauch, Farbgas oder Staubverunreinigungen enthaltende Druckluft denkbar, oder aber auch eine mit Schwebepartikeln angereicherte Flüssigkeit, wobei die Schwebepartikel beispielsweise kleinste Festkörperteilchen oder tropfenförmige Flüssigpartikel oder pastöse Partikel sein könnten.

Die abhängigen Ansprüche stellen vorteilhafte Weiterbildungen der Vorrichtung gemäß Anspruch 1 dar.

Nachfolgend schließt sich anhand einiger in der beiliegenden Zeichnung abgebildeter Ausführungsbeispiele eine nähere Erläuterung der Erfindung an. Es zeigen im einzelnen:
- Figur 1: eine erste Bauform der erfindungsgemäßen Beschattungsvorrichtung in schematischer Darstellung im Zusammenhang mit einem Bauwerksdach, und
- Figuren 2 und 3: ein weiteres Ausführungsbeispiel der Beschattungsvorrichtung in unterschiedlichen Stellungen der Membranwand.

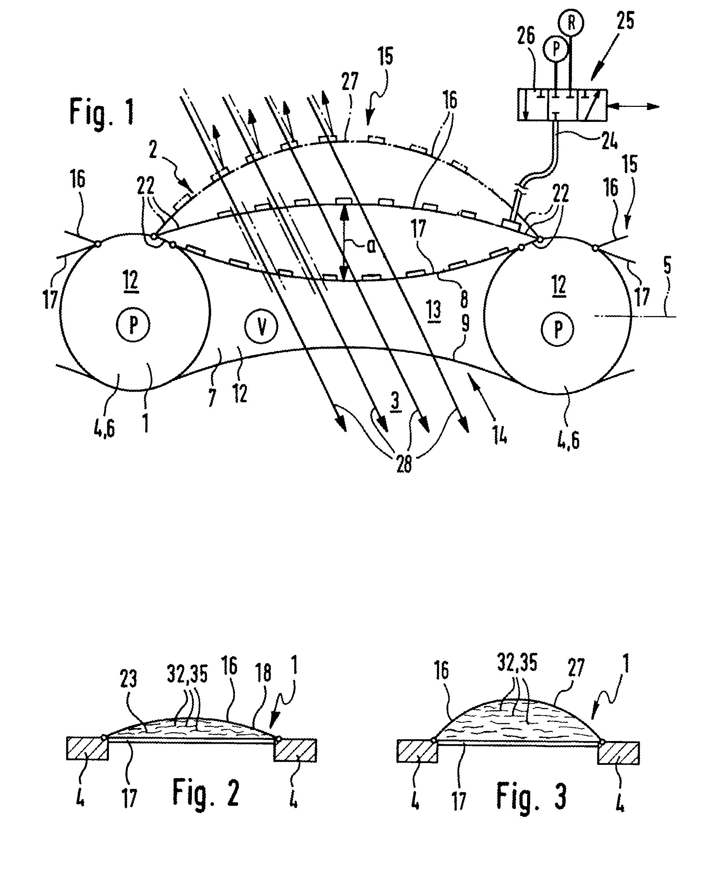

Die Figur 1 zeigt schematisch und im Längsschnitt den Ausschnitt eines Daches 1 eines Bauwerkes, beispielsweise eines Gebäudes. Dieses Dach ist mit einer Beschattungsvorrichtung 2 ausgestattet, mit der sich der Lichteinfall bzw. die Sonneneinstrahlung in den unter dem Dach 1 liegenden Bereich 3, hier ein Gebäuderaum, beeinflussen läßt.

Die Beschattungsvorrichtung 2 läßt sich grundsätzlich im Zusammenhang mit jedwedem lichtdurchlässigen Dach bzw. jedweder lichtdurchlässigen Wand verwenden. Darüber hinaus läßt sie sich auch für sich allein gesehen als Schattenspender einsetzen.

Das beim Ausführungsbeispiel vorhandene Dach 1 verfügt über mehrere die zu überdachende Fläche überquerende Querstreben 4, die in Dachlängsrichtung 5 mit Abstand längsseits aufeinanderfolgend angeordnet sind. Diese Querstreben 4 sind in bevorzugter Ausführungsform von Schlauchkörpern 6 gebildet, die unter einem Überdruck mit Bezug zum umgebenden Atmosphärendruck stehen, so daß sich stabile Fluidstreben ergeben. Bevorzugt sind sie mit einem Gas gefüllt, beispielsweise mit Druckluft, weshalb sie auch als "Air Beams" bezeichnet werden können. Der Überdruck beträgt beispielsweise 0,2 bis 0,5 bar. Die Querstreben 4 bilden die eigentlichen Dachträger.

Zwischen jeweils benachbarten Schlauchkörpern 6 erstreckt sich ein weiterer, zur Umgebung abgeschlossener Hohlraum 7. Er wird längsseits begrenzt durch Wandabschnitte der beiden Schlauchkörper 6 sowie zwei den Zwischenraum zwischen den Querstreben 4 überbrückenden und mit Abstand übereinander angeordneten flexiblen membranartigen Wandelementen 8, 9. Im aufgerichteten Stadium des Daches 1 ist der Hohlraum 7 relativ zum Atmosphärendruck mit einem Unterdruck beaufschlagt, vorzugsweise in einer Größenordnung von 0,005 bar. Dadurch ergibt sich insgesamt eine abwechselnde Aufeinanderfolge von in den Schlauchkörpern 6 ausgebildeten Überdruckkammern 12 und in den Zwischenbereichen ausgebildeten Unterdruckkammern 13. Da die einzelnen Wände fest miteinander verbunden sind, liegt insgesamt eine sehr steife Struktur vor.

Die Wandmaterialien des Daches 1 sind lichtdurchlässig ausgebildet, so daß der unter dem Dach 1 liegende Bereich beziehungsweise Raum 3 vom Sonnenlicht erhellt werden kann. Beim Ausführungsbeispiel liegen unterschiedliche Lichtdurchlässigkeitswerte vor, diejenige der flexiblen Wandelemente 8, 9 ist höher als diejenige der Schlauchkörper 6. Daraus resultiert in dem unter dem Dach 1 liegenden Bereich ein störender Schattenwurf, der mit Hilfe der Beschattungsvorrichtung 2 beseitigt werden kann. Letztere ist beim Ausführungsbeispiel so montiert, daß sie den Zwischenbereich 14 zwischen den benachbarten Schlauchkörpern 6 beschatten kann, während die Schlauchkörper 6 selbst nicht oder nur unwesentlich beschattet werden. Die Beschattungsvorrichtung 2 ist in einzelne Beschattungseinheiten 15 unterteilt, die jeweils einem Zwischenraum 14 zugeordnet sind, wobei das Dach 1 über mehrere solcher in Dachlängsrichtung 5 aufeinanderfolgend angeordneter Zwischenräume 14 verfügt.

Dessen ungeachtet läßt sich das Konstruktionsprinzip der Beschattungsvorrichtung 2 natürlich auch großflächiger verwirklichen.

Die Beschattungsvorrichtung 2 verfügt in jeder Beschattungseinheit 15 über zwei lichtdurchlässige Wände 16, 17. Beispielsgemäß ist die zweite (17) dieser Wände von dem aussen liegenden flexiblen Wandelement 8 gebildet, das aufgrund des herrschenden Unterdruckes in der Unterdruckkammer 13 wie das dem Rauminnern zugewandte innen liegende flexible Wandelement 9 konkav ins Innere der Hohlkammer 7 gewölbt ist.

Grundsätzlich könnte die genannte zweite lichtdurchlässige Wand 17 auch von einem separaten Wandelement gebildet sein.

Die erste lichtdurchlässige Wand 16 der beiden Wände 16, 17 besteht insgesamt aus Material mit gummielastischen Eigenschaften und ist folien- bzw. membranartig dünn ausgebildet, so daß sie nachfolgend als Membranwand bezeichnet sei.

Die Wände 16, 17 sind so mit Abstand übereinanderliegend angeordnet, daß sie beide in etwa parallel zu den Querstreben 4 verlaufen. Sie liegen dabei mit Abstand übereinander, wobei der Abstand im mittleren Bereich zweckmäßigerweise ein Maximum hat und zu den Querstreben 4 hin jeweils abnimmt. In der aus Figur 1 in durchgezogenen Linien gezeichneten Grundstellung 18 ergibt sich im Querschnitt gesehen ein etwa linsenförmiger Wandverlauf der beiden Wände 16, 17.

Die beiden Wände 16, 17 sind im Bereich ihrer Längsränder 22 gasdicht an den Querstreben 4 festgelegt, die bei konventionellen Dachkonstruktionen ohne weiteres von beliebigen anderen Festkörper-Trägern gebildet sein können. Es wäre durchaus möglich, die Wände 16, 17 längsseits fest und insbesondere einstückig miteinander zu verbinden, was bei einer Ausbildung aus geeignetem Kunststoffmaterial keine Probleme bereitet.

Die von den beiden Wänden 16, 17 begrenzte Kammer - nachfolgend als Regulierkammer 23 bezeichnet - wird verwendet, um den quer zur Ausdehnungsebene des Daches 1 gemessenen Abstand a zwischen den beiden lichtdurchlässigen Wänden 16, 17 zu regulieren. Die Regulierkammer 23 steht über eine Fluidleitung 24 mit einer Reguliereinrichtung 25 in Fluidverbindung, mit der sich der in der Regulierkammer 23 herrschende Innendruck bedarfsgemäß einstellen läßt.

Beispielsgemäß wird die Regulierkammer 23 zum Erhalt des erforderlichen Innendruckes mit Druckluft gefüllt. Die Reguliereinrichtung 25 verfügt über ein Steuerventil 26, über das sich die Regulierkammer 23 wahlweise mit einer Druckmittelquelle P oder mit der Umgebung R verbinden läßt. In einer weiteren Stellung, der Neutralstellung, ist die Fluidleitung 24 vollständig abgesperrt, so daß ein konstanter Druck in der Regulierkammer 23 vorherrscht. Die Reguliereinrichtung 25 kann über ein Druckregelventil verfügen, um die Druckeinstellung zu erleichtern. Entsprechend der jeweiligen Schaltstellung des Steuerventils 26 wird Druckluft in die Regulierkammer 23 zugeführt, aus dieser abgeführt oder das Füllvolumen konstant gehalten.

Um die Abstandsänderung zu ermöglichen, ist zumindest eine der beiden lichtdurchlässigen Wände 16, 17, vorliegend die erste lichtdurchlässige Wand bzw. Membranwand 16, gummielastisch verformbar ausgeführt. Wird der Regulierkammer 23 ausgehend von der Grundstellung 18 unter Druck stehendes Fluid zugeführt, wölbt sich die Membranwand 16 weiter nach aussen aus und nimmt beispielsweise die in Figur 1 strichpunktiert angedeutete Betriebsstellung 27 ein. In Abhängigkeit vom Druck in der Regulierkammer 23 lassen sich auf diese Weise stufenlos Betriebsstellungen 27 mit unterschiedlichen Wölbungsgraden der Membranwand 16 verwirklichen.

Die zweite lichtdurchlässige Wand 17 ist beim Ausführungsbeispiel zwar ebenfalls flexibel ausgeführt, hat jedoch kaum relevante Elastizität, so daß sie von dem in der Regulierkammer 23 maximal herrschenden Betriebsdruck nicht relevant verformt wird. Die erfindungsgemäße Beschattungsvorrichtung würde in gleicher Weise funktionieren, wenn die zweite lichtdurchlässige Wand 17 eine starre Wand wäre, beispielsweise eine Glasscheibe. Anstatt die Membranwand 16 vollständig aus Material mit gummielastisch verformbaren Eigenschaften auszuführen, wäre es auch möglich, eine nur partielle Verformbarkeit vorzusehen. Beispielsweise könnte die Membranwand 16 aus lichtdurchlässigem flexiblem und unelastischem Folienmaterial bestehen und lediglich im Bereich der Längsränder 22 über einen gummielastischen Wandbereich an den Querstreben 4 fixiert sein.

In Figur 1 sind mit Pfeilen 28 die Sonnenstrahlen eines angenommenen Lichteinfalls angedeutet. Das Sonnenlicht tritt, so weit es die Wandmaterialien von Dach 1 und Beschattungsvorrichtung 2 zulassen, im wesentlichen ungehindert in den überdachten Bereich 3 ein. Mit Hilfe der Beschattungsvorrichtung 2 kann dieser Lichteinfall reguliert werden und es besteht zweckmäßigerweise vor allem die Möglichkeit, schädliche und störende UV-Strahlung zurückzuhalten.

Die weitere Funktionsweise der Beschattungsvorrichtung wird anhand der Figuren 2 und 3 im Zusammenhang mit einer modifizierten Realisierungsmöglichkeit beschrieben.

Bei dem Ausführungsbeispiel gemäß Figuren 2 und 3 ist wiederum der Ausschnitt eines Daches 1 zu erkennen, und zwar im Bereich zweier parallel zueinander verlaufender Querstreben 4, die wie auch im Falle des anderen Ausführungsbeispiels aus starrem Material bestehen können. Eine lichtdurchlässige zweite Wand 17 erstreckt sich zwischen den beiden Querstreben 4 und besteht vorzugsweise aus lichtdurchlässigem Glas. Dieser zweiten Wand 17 vorgelagert ist eine Membranwand 16, die gemeinsam mit der zweiten Wand 17 die schon erwähnte Regulierkammer 23 begrenzt, die sich entsprechend der obigen Ausführungen mit unterschiedlichem Druck bzw. unterschiedlichen Fluidvolumina beaufschlagen läßt.

Die Figur 2 zeigt eine Grundstellung 18 mit geringer Druckbeaufschlagung und entsprechend geringer Auswölbung der vorzugsweise streifenförmigen Membranwand 16. In Figur 3 ist eine Betriebsstellung 27 mit, verursacht durch den höheren Innendruck, weiter ausgewölbter Membranwand 16 gezeigt. Die zugeordnete Reguliereinrichtung ist nicht näher dargestellt.

Die erzielte Beschattungsintensität basiert nun darauf, daß das Fluid eine Vielzahl kleiner, verteilt angeordneter Beschattungselemente enthält, indem dem in der Regulierkammer 23 befindlichen Fluid schematisch angedeutete Schwebepartikel 35 beigemengt sind, die beispielsweise als Festkörper oder als flüssige oder pastöse Partikel ausgeführt sein können. Je mehr Volumen an Fluid in der Regulierkammer 23 vorhanden ist, desto größer ist der Abstand zwischen den beiden Wänden 16, 17 und desto größer ist auch die "Schichtdicke" der enthaltenen Schwebepartikel 35, die die Beschattungselemente 32 bilden. Je größer die Schichtdicke ist, desto geringer ist die Lichtdurchlässigkeit des entsprechend angereicherten Fluides, so daß über das in der Regulierkammer 23 befindliche Volumen eine Regulierung der Beschattungsintensität möglich ist.

Als Fluid geeigneter Art wäre hier beispielsweise Rauch, Farbpartikel enthaltendes Farbgas oder Staubverunreinigungen enthaltende Druckluft denkbar. Als Staubpartikel wäre beispielsweise Quarzsand denkbar. Möglich wären auch Flüssigkeiten mit geeigneten Schwebestoffen.

Um zu verhindern, daß die die Beschattungselemente bildenden Schwebepartikel 35 sich auf der unteren Wand 17 ablagern und dadurch kein Reguliereffekt mehr eintreten kann, wird die Regulierkammer 23 über die Reguliereinrichtung 25 zweckmäßigerweise im Durchlauf beaufschlagt, was in einem Kreislauf geschehen kann. Dadurch liegt im Innern der Regulierkammer 23 immer eine bestimmte Strömungsgeschwindigkeit oder gar Wirbelbildung vor, die den Niederschlag der Schwebepartikel 35 verhindert.

## Patentansprüche

1. Beschattungsvorrichtung zur Beeinflussung der Sonneneinstrahlung in einen hinter oder unter der Beschattungsvorrichtung liegenden Bereich, mit mindestens einer Regulierkammer (23), die von zwei in Strahlungsrichtung (28) mit Abstand zueinander angeordneten lichtdurchlässigen Wänden (16, 17) begrenzt ist und die mit einer Reguliereinrichtung (25) zur veränderlichen Vorgabe des in ihr herrschenden Innendruckes verbunden ist, wobei eine Vielzahl von kleinen, verteilt angeordneten Beschattungselementen (32) vorhanden ist, deren Relativlage vom durch den in der Regulierkammer (23) herrschenden Innendruck bestimmten Abstand zwischen den beiden Wänden (16, 17) abhängt, dadurch gekennzeichnet, daß mindestens eine der Wände als zumindest partiell gummielastisch verformbare Membranwand (16) ausgebildet ist, und daß sich im Innern der Regulierkammer (23) Beschattungselemente (32) befinden, die von Schwebepartikeln (35) des in der Regulierkammer (23) vorliegenden und unter Druck stehenden Fluides gebildet sind.

2. Vorrichtung nach Anspruch 1, dadurch gekennzeichnet, daß das in der Regulierkammer (32) befindliche Fluid von Rauch, von Farbgas oder von staubverunreinigter Druckluft gebildet ist.

3. Vorrichtung nach Anspruch 1, dadurch gekennzeichnet, daß das in der Regulierkammer (32) befindliche Fluid von einer mit Schwebepartikeln (35) angereicherten Flüssigkeit gebildet ist.

4. Vorrichtung nach Anspruch 3, dadurch gekennzeichnet, daß die Schwebepartikel (35) von Festkörperteilchen, von tropfenförmigen Flüssigpartikeln oder von pastösen Partikeln gebildet sind.

5. Vorrichtung nach einem der Ansprüche 1 bis 4, dadurch gekennzeichnet, daß die Membranwand (16) in Abhängigkeit vom Innendruck in der Regulierkammer (23) unterschiedliche Wölbungen aufweisen kann.

6. Vorrichtung nach einem der Ansprüche 1 bis 5, dadurch gekennzeichnet, daß die Membranwand (16) streifenförmig ausgebildet und an ihren Randbereichen (22) unter Abdichtung an einer Haltestruktur (4) fixiert ist.

7. Vorrichtung nach einem der Ansprüche 1 bis 6, dadurch gekennzeichnet, daß die Membranwand (16) vollständig aus Material mit gummielastischen Eigenschaften besteht.

8. Vorrichtung nach Anspruch 6, dadurch gekennzeichnet, daß die Membranwand (16) an ihren Randbereichen (22) über einen gummielastischen Wandbereich verfügt.

9. Vorrichtung nach einem der Ansprüche 1 bis 8, dadurch gekennzeichnet, daß zumindest auch an der Membranwand (16) Beschattungselemente (32) vorgesehen sind.

10. Vorrichtung nach Anspruch 9, dadurch gekennzeichnet, daß sowohl an der Membranwand (16) als auch an der dieser gegenüberliegenden zweiten Wand (17) Beschattungselemente (32) vorgesehen sind.

11. Vorrichtung nach Anspruch 9 oder 10, dadurch gekennzeichnet, daß die an einer der Wände (16, 17) vorgesehenen Beschattungselemente (32) rasterartig verteilt angeordnet sind.

12. Vorrichtung nach einem der Ansprüche 9 bis 11, dadurch gekennzeichnet, daß die an einer der Wände (16, 17) vorgesehenen Beschattungselemente (32) von Stellen geringerer Strahlungsdurchlässigkeit gebildet sind, die beispielsweise in das Wandmaterial eingelagert und/oder auf dieses zum Beispiel in einem Druckverfahren fest aufgebracht sind.

## Claims

1. Shading device to influence solar radiation in an area lying behind or beneath the shading device, having at least one regulating chamber (23) bounded by two transparent walls (16, 17) spaced apart in the direction of radiation (28) and linked to a regulating device (25) for variable presetting of the internal pressure prevailing within it, wherein there are a multiplicity of small, distributed shading elements (32) with a relative position dependent on the distance between the two walls (16, 17) determined by the internal pressure prevailing in the regulating chamber (23), characterized in that at least one of the walls is in the form of a membrane wall (16) which is at least partially deformable in a rubber-elastic manner, and that the interior of the regulating chamber (23) contains shading elements (32) formed by floating particles (35) of the pressurized fluid which is present in the regulating chamber (23).

2. Device according to claim 1, characterized in that the fluid in the regulating chamber (32) is formed by smoke, coloured gas or dust-contaminated compressed air.

3. Device according to claim 1, characterized in that the fluid in the regulating chamber (32) is formed by a fluid enriched with floating particles (35).

4. Device according to claim 3, characterized in that the floating particles (35) are formed by solid particles, drop-shaped fluid particles or paste-like particles.

5. Device according to any of claims 1 to 4, characterized in that the membrane wall (16) may have bulges which vary, depending on the internal pressure in the regulating chamber (23).

6. Device according to any of claims 1 to 5, characterized in that the membrane wall (16) is in strip form, and is fixed at its edges (22) with sealing to a supporting structure (4).

7. Device according to any of claims 1 to 6, characterized in that the membrane wall (16) is made entirely of material with rubber-elastic properties.

8. Device according to claim 6, characterized in that the membrane wall (16) has a rubber-elastic wall section at its edges (22).

9. Device according to any of claims 1 to 8, characterized in that shading elements (32) are also provided at least on the membrane wall (16).

10. Device according to claim 9, characterized in that shading elements (32) are provided both on the membrane wall (16) and also on the second wall (17) lying opposite the former.

11. Device according to claim 9 or 10, characterized in that the shading elements (32) provided on one of the walls (16, 17) are distributed in a grid pattern.

12. Device according to any of claims 9 to 11, characterized in that the shading elements (32) provided on one of the walls (16, 17) are formed by areas which are less transparent to radiation, and which are for example incorporated in the wall material and/or firmly attached to the latter for example by a compression process.

## Revendications

1. Dispositif pare-soleil destiné à influencer le rayonnement solaire dans une zone située derrière ou au-dessous du dispositif pare-soleil, comportant au moins une chambre de régulation (23), qui est délimitée par deux parois (16, 17) transparentes, disposées à distance l'une de l'autre dans la direction (28) du rayonnement, et qui est reliée à un dispositif de régulation (25) pour modifier la sélection de la pression interne qui règne dans ladite chambre de régulation, un grand nombre de petits éléments pare-soleil (32) répartis et dont la position relative dépend de la distance entre les deux parois (16, 17), déterminée par la pression intérieure régnant dans la chambre de régulation (23), étant prévu, caractérisé en ce qu'au moins l'une des parois est conformée en tant que paroi à membrane (16) au moins partiellement déformable élastiquement et en ce qu'à l'intérieur de la chambre de régulation (23) se trouvent des éléments pare-soleil (32) qui sont formés par des particules en suspension (35) du fluide sous pression se trouvant dans la chambre de régulation (23).

2. Dispositif selon la revendication 1, caractérisé en ce que le fluide qui se trouve dans la chambre de régulation (32) est constitué par de la fumée, par un gaz coloré ou par de l'air comprimé pollué de poussières.

3. Dispositif selon la revendication 1, caractérisé en ce que le fluide qui se trouve dans la chambre de régulation (32) est constitué par un liquide enrichi en particules en suspension (35).

4. Dispositif selon la revendication 3, caractérisé en ce que les particules en suspension (35) sont formées par des particules solides, par des particules liquides en forme de gouttes ou par des particules pâteuses.

5. Dispositif selon l'une des revendications 1 à 4, caractérisé en ce que la paroi à membrane (16) peut présenter des courbures différentes en fonction de la pression intérieure dans la chambre de régulation (23).

6. Dispositif selon l'une des revendications 1 à 5, caractérisé en ce que la paroi à membrane (16) est en forme de bande et est fixée, sur ses zones de bordure (22), de manière étanche, à une structure de support (4).

7. Dispositif selon l'une des revendications 1 à 6, caractérisé en ce que la paroi à membrane (16) est entièrement constituée en une matière présentant les propriétés élastiques du caoutchouc.

8. Dispositif selon la revendication 6, caractérisé en ce que la paroi à membrane (16) comporte, sur ses zones de bordure (22), une zone de paroi qui présente l'élasticité du caoutchouc.

9. Dispositif selon l'une des revendications 1 à 8, caractérisé en ce que des éléments pare-soleil (32) sont prévus au moins aussi sur la paroi à membrane (16).

10. Dispositif selon la revendication 9, caractérisé en ce que sur la paroi à membrane (16), comme sur la deuxième paroi (17) faisant face à la première, sont prévus des éléments pare-soleil (32).

11. Dispositif selon la revendication 9 ou 10, caractérisé en ce que les éléments pare-soleil (32), prévus sur l'une des parois (16, 17), sont répartis de manière à former une grille.

12. Dispositif selon l'une des revendications 9 à 11, caractérisé en ce que les éléments pare-soleil (32) prévus sur l'une des parois (16, 17) sont formés par des emplacements présentant une moindre perméabilité au rayonnement, qui sont inclus par exemple dans la matière de la paroi et/ou qui sont appliqués fixement sur celle-ci, par exemple par un procédé d'impression.
